**Europäisches Patentamt**

**European Patent Office**

**Office européen des brevets**

(11) Veröffentlichungsnummer : **0 130 506**
**B1**

(12) **EUROPÄISCHE PATENTSCHRIFT**

(45) Veröffentlichungstag der Patentschrift :
09.09.87

(51) Int. Cl.⁴ : **G 06 K 11/06**

(21) Anmeldenummer : **84107203.6**

(22) Anmeldetag : **22.06.84**

(54) **Datensichtgerät mit einem Lichtgriffel.**

(30) Priorität : **01.07.83 DE 8319105 U**

(43) Veröffentlichungstag der Anmeldung :
**09.01.85 Patentblatt 85/02**

(45) Bekanntmachung des Hinweises auf die Patenterteilung : **09.09.87 Patentblatt 87/37**

(84) Benannte Vertragsstaaten :
**DE FR IT NL SE**

(56) Entgegenhaltungen :
**FR-A-  681 660**
**FR-A- 2 248 558**
**US-A- 2 403 083**

(73) Patentinhaber : **Siemens Aktiengesellschaft Berlin und München**
**Wittelsbacherplatz 2**
**D-8000 München 2 (DE)**

(72) Erfinder : **Hudek, Anton**
**Ludwigstrasse 21**
**D-7515 Linkenheim (DE)**
Erfinder : **Schweiger, Walter, Dipl.-Ing. (FH)**
**Rheinstrasse 35**
**D-7515 Linkenheim (DE)**

EP 0 130 506 B1

## Beschreibung

Die Erfindung betrifft ein Datensichtgerät mit einem Lichtgriffel.

Lichtgriffel zur Bedienung von Datensichtgeräten sollen so abgelegt werden können, daß sie der Bedienungsperson einen guten ergonomischen Zugriff ermöglichen. Aus der DE-PS-23 52 931 ist es bekannt, den Lichtgriffel in einer Ablage aufzubewahren, die neben dem zu bedienenden Sichtgerät aufgestellt ist. Diese Ablage entspricht den für Kugelschreiber und dergleichen üblichen, die einen rohrförmigen Teil aufweisen, der am vorderen offenen Ende trichterförmig zur Aufnahme eines Kugelschreibers erweitert ist und am hinteren Ende gelenkig gehaltert ist (US-A-24 030 83).

Der vorliegenden Erfindung liegt die Aufgabe zugrunde, eine Ablage für den Lichtgriffel eines Sichtgerätes zu schaffen, in die bzw. aus der der Lichtgriffel ergonomisch gut abgelegt bzw. entnommen werden kann.

Diese Aufgabe wird gemäß der voliegenden Erfindung dadurch gelöst, daß in der Frontseite des Sichtgerätes eine rohrförmige, in einem Kugelgelenk gehalterte Ablage, in die der Lichtgriffel steckbar ist, vorhanden ist. Der abgelegte Lichtgriffel ist daher stets dem zugehörigen Sichtgerät räumlich zugeordnet. Die gelenkige Halterung der Ablage gestattet der Bedienungsperson, die Halterung und den Lichtgriffel in die von ihr gewünschte ergonomisch günstigste Position zu bringen. Vorteilhaft ist die Ablage für den Lichtgriffel nach vorn trichterförmig erweitert, damit der Lichtgriffel leicht eingeführt werden kann. Das Kugelgelenk besteht vorteilhaft aus einer Kugel, die mit der Ablage verbunden ist und die von einer Platte in eine in der Rückseite der Frontseite enthaltene Kugelhalbschale gedrückt ist, welche für die Durchführung der Ablage durchbrochen ist.

Damit die Ablage nicht weit aus der Frontseite herausragt, ist das Kugelgelenk zweckmäßig hinter der Frontseite angeordnet, und in dieser ist eine Öffnung enthalten, durch welche die Ablage ragt und die so groß ist, daß die Ablage in gewünschtem Maße beweglich ist.

Ist die Ablage in der Mitte der Frontseite angebracht, liegt sie für Rechts- wie für Linkshänder ergonomisch günstig. Um den Bildschirm-Arbeitsplatz aufgeräumt zu gestalten, kann sie am unteren Rand der Frontseite angeordnet sein. Auch ist es möglich, am hinteren Ende in dem Kugelgelenk eine Kabeldurchführung vorzusehen, durch welche die Zuleitung zum Lichtgriffel geführt ist, und hinter der Ablagevorrichtung eine Kabelaufwickelvorrichtung vorzusehen.

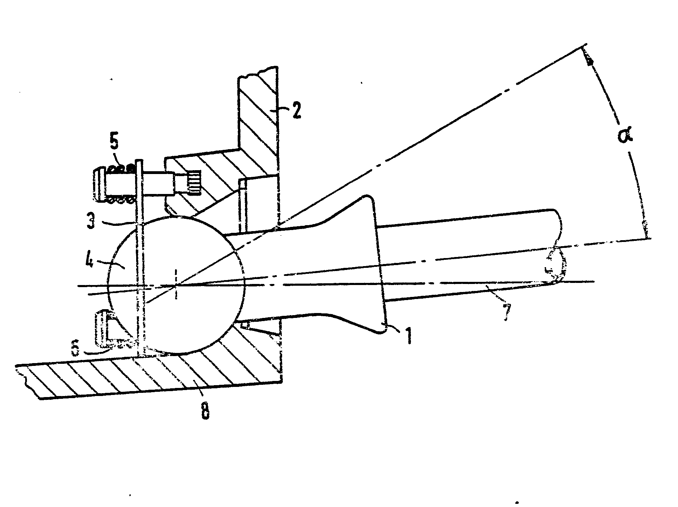

Anhand der Zeichnung werden im folgenden die Erfindung sowie weitere Ausgestaltungen und Vorteile näher beschrieben und erläutert.

Mit 7 ist ein Teil eines Lichtgriffels bezeichnet, der mit seiner Spitze in einer rohrförmigen, nach vorn trichterförmig erweiterten Ablage 1 steckt. Diese ragt durch die Frontseite 2 eines Sichtgerätes, und zwar an deren unteren Rand dicht über dem Boden 8. Die Frontseite 2 und der Boden 8 sind durch den Rahmen des Sichtgerätes gebildet. Dieser ist als Kugelhalbschale ausgebildet, die für die Durchführung der Ablage 1 nach vorn eine Öffnung aufweist. In dieser Halbschale sitzt eine Kugel 4, die mit der Ablage 1 verbunden ist und in welcher die rohrförmige Ablage fortgesetzt ist. Die Kugel 4 sitzt ferner in einer kreisrunden Öffnung einer Platte 3, die mittels drei Federn, von denen zwei, 5 und 6, sichtbar sind, die Kugel 4 in die Halbschale drücken. Es wird dadurch eine konstante Reibung erzielt, so daß die Ablage 1 mit dem Lichtgriffel 7 in jeder beliebigen Stellung innerhalb eines Raumwinkels $\alpha$ eingestellt werden kann. Durch die Vielzahl der möglichen Einstellungen ergeben sich sehr gute ergonomische Bedingungen. Die Ablage 1 ist nicht nur für große und kleine Bedienungspersonen günstig einzustellen, sondern sie ermöglicht auch eine gute Handhabung sowohl für Rechts- wie für Linkshänder.

## Patentansprüche

1. Datensichtgerät mit einem Lichtgriffel, dadurch gekennzeichnet, daß in der Frontseite (2) des Sichtgerätes eine rohrförmige, in einem Kugelgelenk (3, 4) gehalterte Ablage (1) für den Lichtgriffel (7) vorgesehen ist.

2. Datensichtgerät nach Anspruch 1, dadurch gekennzeichnet, daß in der Frontseite (2) eine Öffnung vorhanden ist, durch die die rohrförmige Ablage (1) ragt, und daß die Ablage (1) hinter den Frontseite (2) gelenkig gehaltert ist.

3. Datensichtgerät nach Anspruch 1 oder 2, dadurch gekennzeichnet, daß die Ablage (1) für den Lichtgriffel (7) nach vorn trichterförmig erweitert ist.

4. Datensichtgerät nach einem der Ansprüche 1 bis 3, dadurch gekennzeichnet, daß das Kugelgelenk aus einer Kugel (4) besteht, die mit der Ablage (1) verbunden ist und die von einer Platte (3) federnd in eine in der Rückseite der Frontseite (2) enthaltene Kugelhalbschale gedrückt ist, welche für die Durchführung der Ablage (1) durchbrocken ist.

5. Datensichtgerät nach Anspruch 4, dadurch gekennzeichnet, daß die Platte (3) ein kreisrundes Loch aufweist, in dem die mit der Ablage (1) verbundene Kugel (4) drehbar sitzt und die von Druckfedern (5, 6) gegen die Kugel (4) gepreßt ist.

6. Datensichtgerät nach einem der Ansprüche 1 bis 5, dadurch gekennzeichnet, daß die Ablage (1) in der Mitte der Frontseite (2) angebracht ist.

7. Datensichtgerät nach einem der Ansprüche 1 bis 6, dadurch gekennzeichnet, daß die Ablage (1) am unteren Rand der Frontseite angebracht ist.

## Claims

1. A data display device comprising a light pen, characterised in that a tubular holder (1), mounted in a ball and socket joint (3, 4), is provided for the light pen (7) in the front side (2) of the display device.

2. A data display device as claimed in claim 1, characterised in that the front side (2) is provided with an opening through which tubular holder (1) projects, and that the holder (1) is hinge-mounted behind the front side (2).

3. A data display device as claimed in claim 1 or claim 2, characterised in that the holder (1) for the light pen (7) widens in a funnel formation towards the front.

4. A data display device as claimed in one of the claims 1 to 3, characterised in that the ball and socket joint comprises a ball joint (4) which is connected to the holder (1) and which is resiliently pressed by a plate (3) into a semi-spherical socket which is held at the rear of the front side (2) and which is provided with an opening for the passage of the holder (1).

5. A data display device as claimed in claim 4, characterised in that the plate (3) includes a circular hole in which is positioned, so as to be rotatable, the ball joint (4) connected to the holder (1) and that the plate (3) is pressed against the ball joint (4) by compression springs (5, 6).

6. A data display device as claimed in one of the claims 1 to 5, characterised in that the holder (1) is arranged at the centre of the front side (2).

7. A data display device as claimed in one of the claims 1 to 6, characterised in that the holder (1) is arranged at the lower edge of the front side.

## Revendications

1. Appareil de visualisation de données comportant un photostyle, caractérisé par le fait qu'un support tubulaire (1), maintenu dans une articulation à rotule (3, 4), pour le photostyle (7), est prévu dans la face avant (2) de l'appareil de visualisation.

2. Appareil de visualisation de données suivant la revendication 1, caractérisé par le fait qu'une ouverture, dans laquelle pénètre le support tubulaire (1), est ménagée dans la face avant (2) et que le support (1) est maintenu selon une liaison articulée en arrière de la face avant (2).

3. Appareil de visualisation de données suivant la revendication 1 ou 2, caractérisé par le fait que le support (1) pour le photostyle (7) s'élargit vers l'avant avec une forme d'entonnoir.

4. Appareil de visualisation de données suivant l'une des revendications 1 à 3, caractérisé par le fait que l'articulation à rotule est constituée par une sphère (4) qui est reliée au support (1) et est repoussée élastiquement par une plaque (3) dans une coque hémisphérique maintenue sur le côté arrière de la plaque avant (2) et qui est percée de manière à permettre le passage du support (1).

5. Appareil de visualisation de données suivant la revendication 4, caractérisé par le fait que la plaque (3) comporte un trou circulaire, dans lequel la sphère (4) reliée au support (1) repose de manière à pouvoir tourner, et est repoussée contre la sphère (4) au moyen de ressorts de pression (5, 6).

6. Appareil de visualisation de données suivant l'une des revendications 1 à 5, caractérisé par le fait que le support (1) est disposé au centre de la face avant (2).

7. Appareil de visualisation de donnée suivant l'une des revendications 1 à 6, caractérisé par le fait que le support (1) est monté sur le bord inférieur de la face avant.